# EUROPEAN PATENT APPLICATION

(11) **EP 2 784 986 A1**
(43) Date of publication of application: **01.10.2014**
(21) Application number: 13183853.4
(22) Date of filing: 11.09.2013
(51) Int. Cl.: H04L 12/28

(54) **Terminal apparatus and control system**

(30) Priority: 25.03.2013 JP 2013062540
(71) Applicant: Toshiba Lighting & Technology Corporation, Yokosuka-shi, Kanagawa 237-8510 (JP)
(72) Inventor: NOGUCHI, Yoko, Kanagawa, 237-8510 (JP)
(74) Representative: Bokinge, Ole

(57) **Abstract**

A terminal apparatus (50) includes an input receiving unit (511), a route selecting unit (512), and a signal transmitting unit (513). The input receiving unit (511) receives an input for controlling at least one electrical appliance among a plurality of electrical appliances (40A, 40B, 40C). The route selecting unit (512) selects one control route among a first control route for controlling the electrical appliance via a server (10) and a control apparatus (30) connected to each other via a network (20), a second control route for controlling the electrical appliance via the control apparatus (30) that controls the plurality of electrical appliances, and a third control route for directly controlling the electrical appliance. The signal transmitting unit (513) transmits, through the control route selected by the route selecting unit (512), a control signal for causing the control apparatus (30) to execute control corresponding to the input.

## Description

### FIELD

Embodiments described herein generally relate to a terminal apparatus and a control system.

### BACKGROUND

In recent years, a power management system called HEMS (Home Energy Management System) has been proposed. For example, the HEMS measures, for each of systems, power consumptions of indoor electrical appliances and supports energy saving measures.

There has been also proposed a technique for transmitting, via a network, information concerning indoor electrical appliances from a control apparatus arranged indoors to an outdoor server connected to the control apparatus and managing the information. A user can perform control of the electrical appliances by accessing the network using a terminal apparatus and transmitting an instruction to the server.

However, in a configuration in which the user accesses the outdoor server from the terminal apparatus and transmits an instruction from the server to the indoor electrical appliances, since a control route is long, it takes time to complete the control. Therefore, it is difficult to realize the control on a real time basis. On the other hand, when the user attempts to realize the control not via the server and via only the indoor control apparatus, the substantial capacity and function of the control apparatus are necessary. When the user depends only on one of the control routes, if the user operates many electrical appliances at one time or attempts to realize fine control, the control route is congested.

### BRIEF DESCRIPTION OF THE DRAWINGS

FIG. 1 is a diagram schematically showing an example of a control system according to a first embodiment;
FIG. 2A is a diagram for explaining selection of a first control route in the control system;
FIG. 2B is a diagram for explaining selection of a second control route in the control system;
FIG. 2C is a diagram for explaining selection of a third control route in the control system;
FIG. 3 is a diagram showing an example of the configuration of a terminal apparatus according to the first embodiment;
FIG. 4 is a flowchart for explaining an example of a flow of electrical appliance control processing according to the first embodiment; and
FIG. 5 is a flowchart for explaining an example of a flow of route selection processing according to the first embodiment.

### DETAILED DESCRIPTION

In general, according to one embodiment, there is provided a terminal apparatus including: an input receiving unit configured to receive an input for controlling at least one electrical appliance among a plurality of electrical appliances; a route selecting unit configured to select one control route among a first control route for controlling the electrical appliance via a server and a control apparatus connected to each other via a network, a second control route for controlling the electrical appliance via the control apparatus that controls the plurality of electrical appliances, and a third control route for directly controlling the electrical appliance; and a signal transmitting unit configured to transmit, through the control route selected by the route selecting unit, a control signal for causing the control apparatus to execute control corresponding to the input received by the input receiving unit.

The terminal apparatus may further include: a result receiving unit configured to receive an execution result of the control corresponding to the control signal transmitted by the signal transmitting unit; and a storing unit configured to store the execution result received by the result receiving unit.

In the terminal apparatus, the execution result stored in the storing unit may be transmitted to the server at every predetermined time or every time a predetermined event occurs.

In the terminal apparatus, the route selecting unit may select one control route among the first, second, and third control routes according to a standard set in advance.

In the terminal apparatus, the route selecting unit may select a control route according to whether communication is established between the terminal apparatus and the control apparatus.

In the terminal apparatus, the route selecting unit may select a control route according to the number of electrical appliances controlled by the input received by the input receiving unit.

In the terminal apparatus, the route selecting unit may select a control route according to control execution time designated by the input received by the input receiving unit.

In the terminal apparatus, the route selecting unit may detect a failure or an operation stop of the server and the control apparatus and select a control route not passing through the server and the control apparatus in which the failure or the operation stop is detected.

The terminal apparatus may further include a display unit configured to display an interface for receiving an input for controlling at least one electrical appliance. The interface may be displayed in common irrespective of which of the control routes the route selecting unit selects.

In general, according to another embodiment, there is provided a control system including: a plurality of electrical appliances; a control apparatus configured to control the plurality of electrical appliances; a server connected to the control apparatus; and the terminal apparatus explained above.

Terminal apparatuses and control systems according to embodiments are explained in detail below with reference to the drawings. In the embodiments, components having the same functions are denoted by the same reference numerals and signs and redundant explanation of the components is omitted.

### First Embodiment

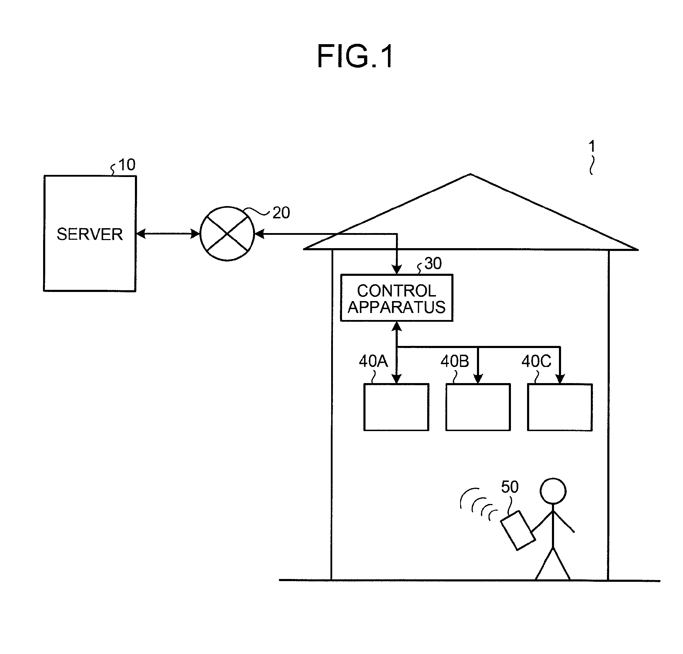

FIG. 1 is a diagram schematically showing an example of a control system according to a first embodiment. The example of the control system according to the first embodiment is explained with reference to FIG. 1.

### Example of the configuration of a control system 1

A control system 1 according to the first embodiment shown in FIG. 1 includes a server 10, a control apparatus 30, electrical appliances 40A, 40B, and 40C, and a terminal apparatus 50. The server 10 and the control apparatus 30 are connected by a network 20 to be capable of communicating with each other. The control apparatus 30 is connected to the electrical appliances 40A, 40B, and 40C to be capable of communicating with each other using an ECHONET Lite or the like.

The server 10 is arranged outdoors and receives information concerning the electrical appliances 40A, 40B, and 40C from the control apparatus 30 via the network 20. The server 10 can transmit, via the network 20, a signal for controlling the electrical appliances 40A, 40B, and 40C to the control apparatus 30. The server 10 can transmit, according to requests transmitted from the control apparatus 30 and the terminal apparatus 50, information stored in the server 10. The server 10 is, for example, a management server that collects and accumulates information concerning indoor electrical appliances in an HEMS or the like.

The network 20 realizes transmission and reception of information between the server 10 and the control apparatus 30. The terminal apparatus 50 can access the network 20. A form of the access is not specifically limited. For example, the terminal apparatus 50 can access the network 20 through radio communication, infrared communication, or the like. The network 20 may be, for example, the Internet, a WAN (Wide Area Network), or a LAN (Local Area Network).

The control apparatus 30 controls the electrical appliances 40A, 40B, and 40C. The control apparatus 30 is arranged indoors and receives, for example, information concerning states of use of the electrical appliances 40A, 40B, and 40C. For example, if the electrical appliance 40A is a luminaire, the control apparatus 30 receives information such as lighting timing and extinguishing timing and time from lighting to extinction of the electrical appliance 40A. The control apparatus 30 receives information concerning a dimming degree and a color temperature of the electrical appliance 40A.

The control apparatus 30 transmits the information received from the electrical appliances 40A, 40B, and 40C to the server 10. The transmitted information is accumulated and managed in the server 10. Timing of the information transmission from the control apparatus 30 to the server 10 is not specifically limited. For example, the control apparatus 30 may transmit the information every time the control apparatus 30 receives the information or may transmit the information every time a predetermined time elapses. The control apparatus 30 may transmit the information only when the server 10 requests the transmission of the information.

For example, when the control apparatus 30 receives a signal for requesting transmission of information from the terminal apparatus 50, the control apparatus 30 transmits the information received from the electrical appliances 40A, 40B, and 40C to the terminal apparatus 50. When the requested information is not stored in the control apparatus 30, the control apparatus 30 transmits a signal for requesting transmission of the information to the server 10 and transmits the information received from the server 10 to the terminal apparatus 50.

The control apparatus 30 receives control signals for controlling the electrical appliances 40A, 40B, and 40C from the server 10 and the terminal apparatus 50. For example, upon receiving a control signal for instructing lighting of the electrical appliance 40A from the server 10, the control apparatus 30 controls and lights the electrical appliance 40A according to content of the control signal.

When communication is established between the control apparatus 30 and the terminal apparatus 50, the control apparatus 30 can receive a control signal for controlling the electrical appliances 40A, 40B, and 40C from the terminal apparatus 50. The control apparatus 30 controls the electrical appliances 40A, 40B, and 40C according to content of the control signal received from the terminal apparatus 50.

The control apparatus 30 is, for example, a hub, a router, or an access point arranged indoors in the HEMS.

The electrical appliances 40A, 40B, and 40C are home electrical appliances arranged indoors. The electrical appliances 40A, 40B, and 40C are, for example, an air conditioner, a water heater, an intercom, and a luminaire. However, the electrical appliances 40A, 40B, and 40C are not limited to these. Arbitrary home electric products and the like can be used as the electrical appliances 40A, 40B, and 40C. Control of the home electrical appliances 40A, 40B, and 40C is realized by the control apparatus 30 receiving a control signal transmitted from the server 10 and controlling the electrical appliances 40A, 40B, and 40C according to content of the control signal. It is also possible that the terminal apparatus 50 transmits a control signal to the control apparatus 30 and the control apparatus 30 controls the electrical appliances 40A, 40B, and 40C according to content of the control signal. The terminal apparatus 50 can also realize the control by directly transmitting a control signal to the electrical appliances 40A, 40B, and 40C by radio, infrared communication, Wi-Fi, or the like.

The three electrical appliances 40A, 40B, and 40C are shown in FIG. 1. However, the number of electrical appliances connected to the control apparatus 30 is not specifically limited. An arbitrary number of electrical appliances can be controlled by the control apparatus 30.

The terminal apparatus 50 is a communication terminal that can be carried by a user. For example, the terminal apparatus 50 is a smart phone, a cellular phone, a PHS (Personal Handyphone System), a PDA (Personal Digital Assistant), a tablet PC (Portable Computer), or the like. The terminal apparatus 50 is not specifically limited as long as the terminal apparatus 50 can communicate with the server 10, the control apparatus 30, and each of the electrical appliances 40A, 40B, and 40C. The terminal apparatus 50 may be an arbitrary apparatus. When the terminal apparatus 50 is used indoors, a computer set in a home or an office can also be used as the terminal apparatus 50. Different communication terminals may be used as the terminal apparatus 50 outdoors and indoors. Family members may respectively carry communication terminals and use each of the communication terminals as the terminal apparatus 50.
Control routes for the electrical appliances by the terminal apparatus 50

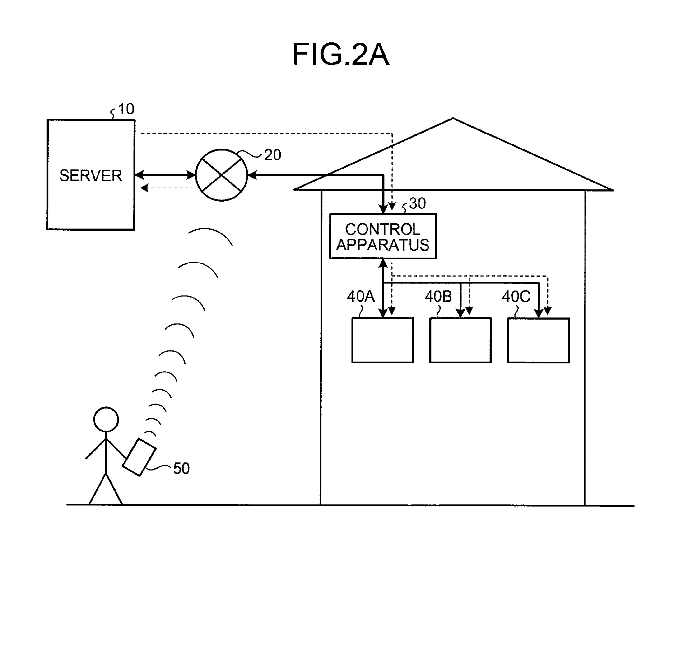

Control routes for the electrical appliances 40A, 40B, and 40C controlled using the terminal apparatus 50 are explained with reference to FIGS. 2A to 2C. In the first embodiment, the control of the electrical appliances 40A, 40B, and 40C via three control routes can be realized using the terminal apparatus 50.

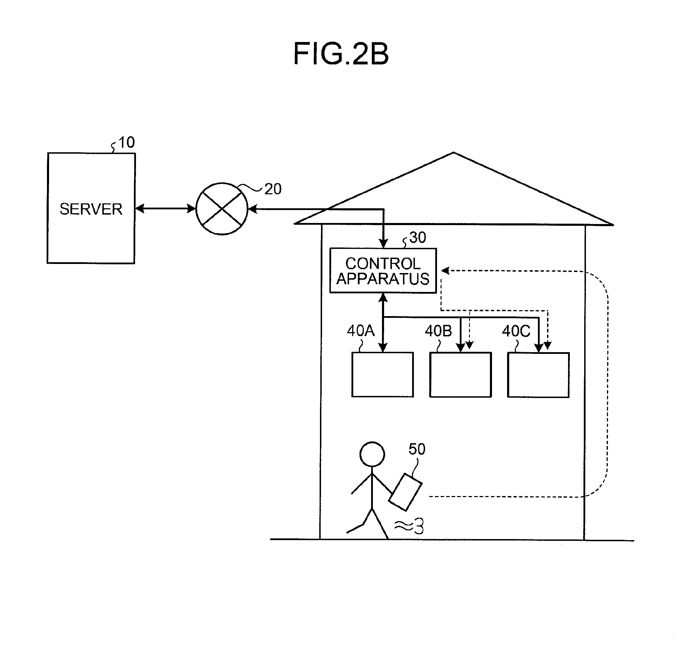

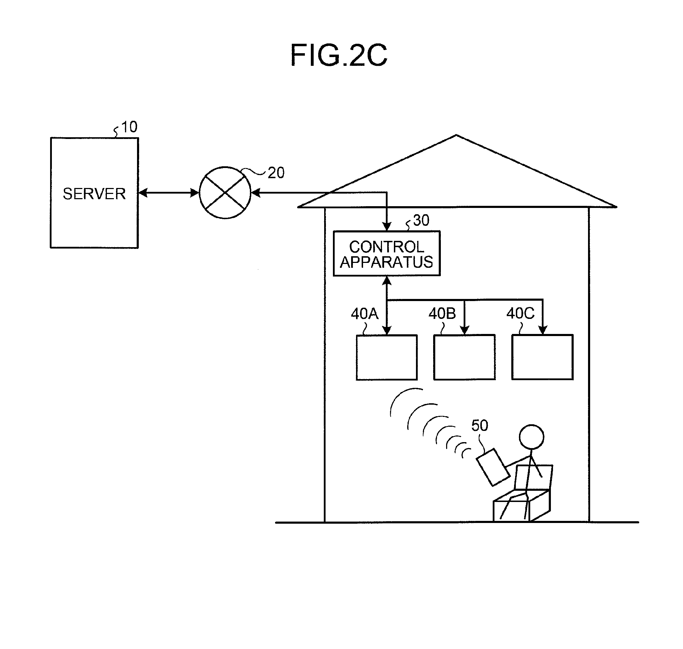

FIG. 2A is a diagram for explaining selection of a first control route in the control system 1 according to the first embodiment. FIG. 2B is a diagram for explaining selection of a second control route in the control system 1 according to the first embodiment. FIG. 2C is a diagram for explaining selection of a third control route in the control system 1 according to the first embodiment.

### First control route

The first control route is explained with reference to FIG. 2A. In communication performed using the first control route, a control signal from the terminal apparatus 50 is transmitted to the control apparatus 30 via the network 20 and the server 10. The control signal is transmitted from the control apparatus 30 to the electrical appliances 40A, 40B, and 40C.

It is assumed that, when the user carries the terminal apparatus 50 and is present outdoors, the user desires to control the electrical appliances 40A, 40B, and 40C. In this case, the user accesses the network 20 from the terminal apparatus 50 using, for example, a cellular phone network and transmits a signal for instructing control content to the server 10. Upon receiving the signal, the server 10 analyzes information included in the signal and specifies an electrical appliance to be controlled and a control apparatus that manages the electrical appliance. The server 10 transmits, to the specified control apparatus 30, a signal for instructing the control apparatus 30 to control the electrical appliance to be controlled. Upon receiving the signal, the control apparatus 30 controls, according to the control content, the electrical appliances 40A, 40B, and 40C to be controlled.

In the communication performed using the first control route, in this way, the instruction from the terminal apparatus 50 is transmitted to the electrical appliances 40A, 40B, and 40C via the server 10, the network 20, and the control apparatus 30. That is, in the communication performed using the first control route, since a route length is long, control content desired by the user cannot be immediately executed. Therefore, when the user desires to realize the control on a real time basis, the first control route is not preferable. However, when control not requiring processing to be performed on a real time basis, for example, processing for collectively managing an execution program and an operation log is performed, the first control route is preferable in that information can be centrally processed via the server 10. The first control route is suitable, for example, when energy management is performed in the whole region via the Internet.

### Second control route

The second control route is explained with reference to FIG. 2B. In communication performed using the second control route, a control signal from the terminal apparatus 50 is transmitted to the electrical appliances 40A, 40B, and 40C through the control apparatus 30 not via the server 10 and the network 20.

It is assumed that the user staying indoors is about to go out carrying the terminal apparatus 50 and desires to turn off power supplies for the electrical appliances 40B and 40C that are in operation at that point. For example, when the electrical appliance 40B and the electrical appliance 40C are arranged in separated places, it is troublesome to move close to the respective electrical appliances and turn off the power supplies. However, since the route is long, it takes time to access the server 10 using the terminal apparatus 50 and cause the server 10 to transmit an instruction for control. In such a case, it is sufficient that a control signal from the terminal apparatus 50 is transmitted to the control apparatus 30 and the control apparatus 30 collectively controls the plurality of electrical appliances 40B and 40C. Therefore, the control signal from the terminal apparatus 50 is transmitted to the control apparatus 30. The control signal is transmitted from the control apparatus 30 to the electrical appliances 40B and 40C.

The second control route has a short route length compared with the first control route. Therefore, the second control route is suitable for collective control performed when it is desired to control a plurality of electrical appliances in association with one another.

### Third control route

The third control route is explained with reference to FIG. 2C. In communication performed using the third control route, a control signal from the terminal apparatus 50 is directly transmitted to the electrical appliances 40A, 40B, and 40C not via any of the server 10, the network 20, and the control apparatus 30.

It is assumed that the user stays indoors and relaxes with the terminal apparatus 50 placed nearby. For example, it is assumed that the user is about to watch television and desires to reduce the illuminance of the electrical appliance 40A, which is a luminaire. In this case, the user can immediately reduce the illuminance of the electrical appliance 40A and watch television in a room with appropriate brightness by directly transmitting a control signal from the terminal apparatus 50 to the electrical appliance 40A.

In this way, the electrical appliance 40A is directly controlled not via any of the server 10, the network 20, and the control apparatus 30. Consequently, it is possible to smoothly transmit a signal and realize the control on a real time basis. In the third control route, information concerning control content is not transmitted to the server 10 and the control apparatus 30. Therefore, the third control route is unsuitable when it is desired to maintain an operation log and comprehensively manage a plurality of electrical appliances. However, when it is desired to instantly obtain responses of the electrical appliances 40A, 40B, and 40C, the third control route is considered to be optimum. The third control route is suitable, for example, when the user executes operation for switching a luminaire to a favorite light color.

The control system 1 according to the first embodiment selects an appropriate control route out of the first, second, and third control routes without the user being aware of switching of the control routes and realizes processing corresponding to control content.

### Example of the configuration of the terminal apparatus 50

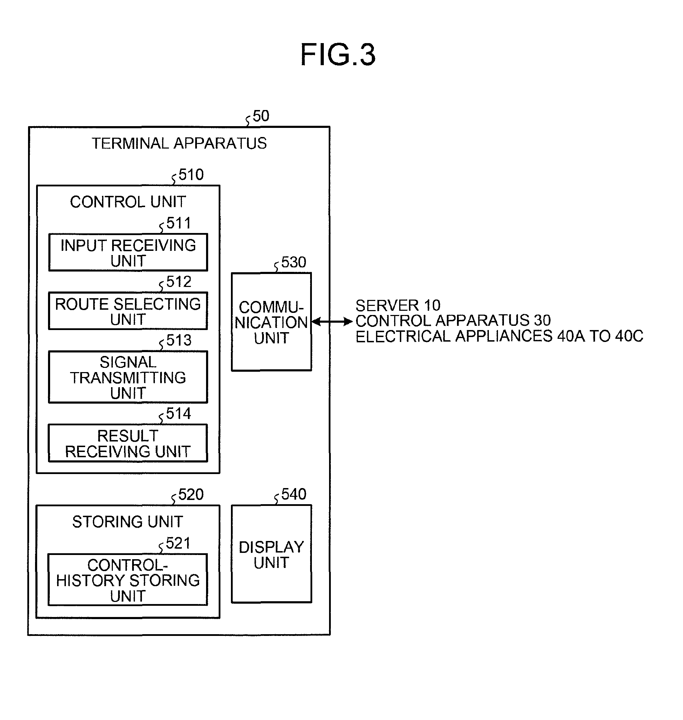

FIG. 3 is a diagram showing an example of the configuration of the terminal apparatus 50 according to the first embodiment. The example of the configuration of the terminal apparatus 50 is explained with reference to FIG. 3.

The terminal apparatus 50 includes a control unit 510, a storing unit 520, a communication unit 530, and a display unit 540.

The control unit 510 controls processing in the terminal apparatus 50. The storing unit 520 stores information generated by the processing in the terminal apparatus 50 and information used for the processing.

The communication unit 530 realizes communication between the terminal apparatus 50 and the other apparatuses. For example, the terminal apparatus 50 communicates with the server 10, the control apparatus 30, and the electrical appliances 40A, 40B, and 40C via the communication unit 530.

A communication form between the terminal apparatus 50 and the other apparatuses is not specifically limited. For example, an arbitrary communication form such as radio communication, infrared communication, or Wi-Fi can be adopted.

The display unit 540 displays a user interface or the like. The display unit 540 is, for example, a monitor. When the user inputs an instruction for controlling an electrical appliance, it is preferable that the same interface is displayed on the display unit 540 irrespective of via which control route among the first control route, the second control route, and the third control route the control is executed. Since the same interface is always displayed, the user can instruct the control of the electrical appliance without being particularly aware of the control route. Therefore, it is possible to improve convenience of the control system 1.

The control unit 510 includes an input receiving unit 511, a route selecting unit 512, a signal transmitting unit 513, and a result receiving unit 514.

The input receiving unit 511 receives an input for controlling an electrical appliance from the user. For example, the user inputs, from the interface displayed on the display unit 540, an instruction to set a color temperature of the electrical appliance 40A to 5000 K. For example, the user inputs an instruction to "turn on the electrical appliance 40A at 10 o'clock". The input receiving unit 511 receives these instructions and sends the instructions to the route selecting unit 512.

The route selecting unit 512 determines which control route among the first control route, the second control route, and the third control route is used to execute control. That is, the route selecting unit 512 selects one control route out of the first control route, the second control route, and the third control route.

In the first embodiment, the route selecting unit 512 selects a control route according to whether communication is established between the terminal apparatus 50 and the control apparatus 30. The route selecting unit 512 selects a control route according to whether one electrical appliance is a control target or a plurality of electrical appliances are control targets in an instruction received by the input receiving unit 511. When time is designated as control time in the instruction received by the input receiving unit 511, the route selecting unit 512 selects a control route according to whether the designated time is later than predetermined time.

When communication is directly established between the terminal apparatus 50 and the control apparatus 30, the terminal apparatus 50 is considered to be present indoors. In this case, quick control can be performed when control is executed not through the server 10 and the network 20. Therefore, when communication is established between the terminal apparatus 50 and the control apparatus 30, the route selecting unit 512 excludes the first control route from selection targets.

On the other hand, when communication is not directly established between the terminal apparatus 50 and the control apparatus 30, the terminal apparatus 50 is considered to be present outdoors. In this case, control of the electrical appliances 40A, 40B, and 40C cannot be realized unless the control is performed through the server 10 and the network 20. Therefore, when communication is not established between the terminal apparatus 50 and the control apparatus 30, the route selecting unit 512 selects the first control route.

If the terminal apparatus 50 is present indoors when one control target is specified in the instruction received by the input receiving unit 511, quick control processing can be realized if a control signal is directly transmitted to an electrical appliance. Therefore, in this case, the route selecting unit 512 selects the third control route.

When a plurality of control targets are specified in the instruction received by the input receiving unit 511, even if the terminal apparatus 50 is present indoors, it is considered convenient if control is executed through the control apparatus 30 rather than through direct transmission of a control signal to electrical appliances because processing for associating a plurality of electrical appliances can be performed. Therefore, when there is a plurality of control targets, even if the terminal apparatus 50 is present indoors, the route selecting unit 512 selects the second control route rather than the third control route.

When designation of control time is included in the instruction received by the input receiving unit 511, if the control time is time when quick processing is unnecessary such as 9 o'clock next day, necessity of selecting the third control route is low. On the other hand, when the control time is later, it is convenient to select a control route passing the server 10 and the control apparatus 30 because a history of control content is left in the server 10 and the control apparatus 30.

Therefore, a predetermined time is set in advance taking into account time required for performing the control processing through the first control route. When the control time is set later than the predetermined time, the route selecting unit 512 selects the first control route. When the control time is not set later than the predetermined time, the route selecting unit 512 selects the second or third control route taking into account other conditions.

In this way, the route selecting unit 512 selects an optimum control route according to control content.

The signal transmitting unit 513 transmits a control signal using the control route selected by the route selecting unit 512.

The result receiving unit 514 receives a result of determining whether control is executed according to the signal transmitted by the signal transmitting unit 513. It is also possible that information requesting an acknowledgement is included in the signal transmitted by the signal transmitting unit 513 and an electrical appliance to be controlled returns a control result. Information concerning the control result received by the result receiving unit 514 is stored in a control-history storing unit 521 (explained below) of the storing unit 520.

The storing unit 520 includes the control-history storing unit 521. The control-history storing unit 521 stores a history concerning control processing executed as a result of an input from the user.

For example, when the third control route is selected, since the control processing is not performed through the server 10 and the control apparatus 30, a history is not left in the server 10 and the control apparatus 30. Therefore, when the control processing via the third control route is executed according to an input, the terminal apparatus 50 stores a history of the control processing in the control-history storing unit 521. The terminal apparatus 50 transmits the history to the server 10 at every predetermined time or every time some event occurs.

By configuring the terminal apparatus 50 as explained above, even when the control processing is executed through the control route not passing the server 10 and the control apparatus 30, it is possible to transmit information concerning the processing to the server 10 after the execution of the processing and appropriately maintain a record of the processing.

### Example of a flow of electrical appliance control processing

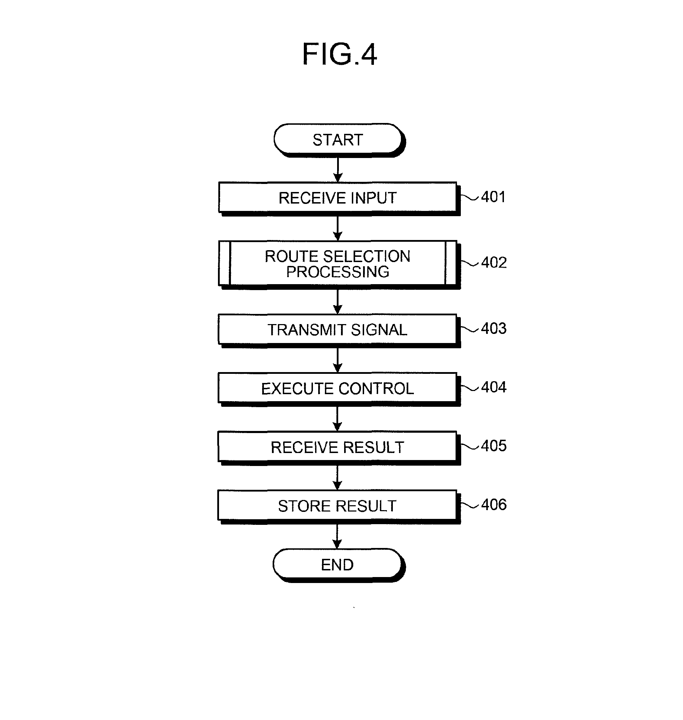

An example of a flow of electrical appliance control processing according to the first embodiment is explained with reference to FIG. 4. FIG. 4 is a flowchart for explaining the example of the flow of the electrical appliance control processing according to the first embodiment.

As shown in FIG. 4, first, the user looks at the display unit 540 of the terminal apparatus 50, specifies an electrical appliance that the user desires to control, and inputs desired control content. Then, the input receiving unit 511 receives the input (Act 401). The input receiving unit 511 sends the received input to the route selecting unit 512. The route selecting unit 512 analyzes content of the input sent from the input receiving unit 511 and executes route selection processing (Act 402). The route selection processing is explained below.

The route selecting unit 512 selects, as a result of the route selection processing, one control route out of the first control route, the second control route, and the third control route. The route selecting unit 512 sends information concerning the selected control route to the signal transmitting unit 513. Upon receiving the information concerning the control route, the signal transmitting unit 513 transmits a control signal for executing control via the selected control route (Act 403). The control signal reaches, via the selected control route, the electrical appliance to be controlled and the control is executed (Act 404).

When the control processing is completed, a signal for notifying a result of the control processing is transmitted to the terminal apparatus 50. The result receiving unit 514 receives the signal (Act 405) and stores a result of the control processing in the control-history storing unit 521 (Act 406). The electrical appliance control processing ends.

### Example of a flow of route selection processing

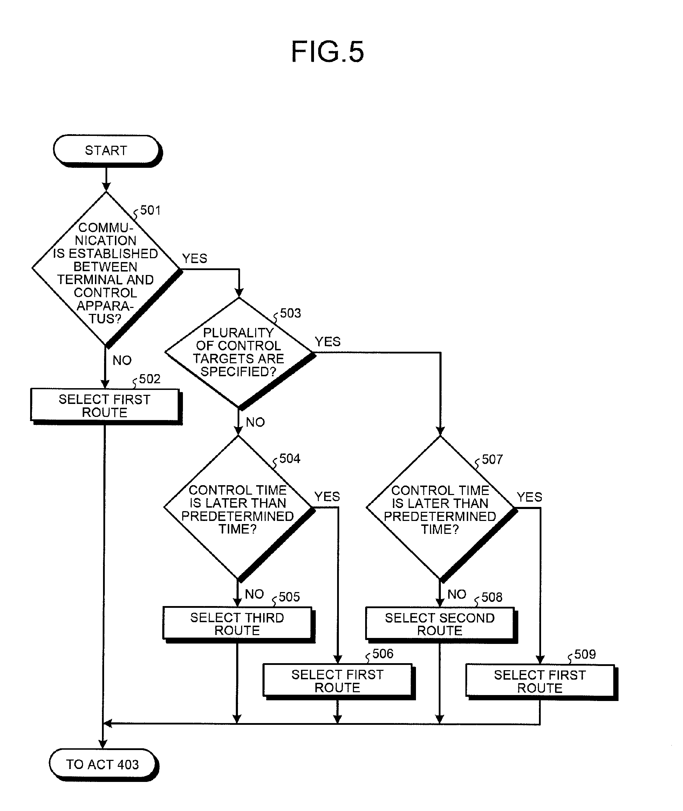

An example of a flow of route selection processing by the route selecting unit 512 is explained with reference to FIG. 5. FIG. 5 is a flowchart for explaining the example of the flow of the route selection processing according to the first embodiment.

First, when an input is sent from the input receiving unit 511, the route selecting unit 512 determines whether communication is established between the terminal apparatus 50 and the control apparatus 30 (Act 501). When determining that communication is not established (No in Act 501), the route selecting unit 512 selects the first control route (Act 502).

On the other hand, when determining that communication is established (Yes in Act 501), the route selecting unit 512 determines whether a plurality of control targets are specified by the input (Act 503). When determining that one control target is specified (No in Act 503), subsequently, the route selecting unit 512 determines whether time specified as control time in the input is later than predetermined time (Act 504). When determining that the control time is not later than the predetermined time (No in Act 504), the route selecting unit 512 selects the third control route (Act 505). On the other hand, when determining that the control time is later than the predetermined time (Yes in Act 504), the route selecting unit 512 selects the first control route (Act 506).

On the other hand, when determining in Act 503 that a plurality of control targets are specified (Yes in Act 503), subsequently, the route selecting unit 512 determines whether the control time is later than the predetermined time (Act 507). When determining that the control time is not later than the predetermined time (No in Act 507), the route selecting unit 512 selects the second control route (Act 508). When determining that the control time is later than the predetermined time (Yes in Act 507), the route selecting unit 512 selects the first control route (Act 509). The route selection processing ends and continues to Act 405 (FIG. 4).

### Effects of the first embodiment

As explained above, the terminal apparatus 50 according to the first embodiment includes the input receiving unit 511 configured to receive an input for controlling at least one electrical appliance among a plurality of electrical appliances, the route selecting unit 512 configured to select one control route among the first control route for controlling the electrical appliance via the server and the control apparatus connected to each other via the network, the second control route for controlling the electrical appliances via the control apparatus that controls the plurality of electrical appliances, and the third control route for directly controlling the electrical appliance, and the signal transmitting unit 513 configured to transmit, through the control route selected by the route selecting unit 512, a control signal for causing the control apparatus to execute control corresponding to the input received by the input receiving unit 511. Therefore, it is possible to select an appropriate control route according to content of the input received by the input receiving unit 511 and execute processing.

The terminal apparatus 50 according to the first embodiment further includes the result receiving unit 514 configured to receive an execution result of the control corresponding to the control signal transmitted by the signal transmitting unit 513 and the storing unit 520 configured to store the execution result received by the result receiving unit 514. Therefore, even when the route not passing the server 10 and the control apparatus 30 is selected, it is possible to store content and a result of processing and transmit the content and the result to the server 10 later. Consequently, it is possible to appropriately store and manage the processing contents.

In the terminal apparatus 50 according to the first embodiment, the execution result stored in the storing unit 520 is transmitted to the server 10 at every predetermined time or every time a predetermined event occurs. Therefore, even if the user is not aware of a history of processing content, the history of the processing content is appropriately managed in the server 10. Thus, it is possible to improve convenience of the control system 1.

In the terminal apparatus 50 according to the first embodiment, the route selecting unit 512 selects one control route among the first, second, and third control routes according to a standard set in advance. Therefore, even if the user does not designate a selection standard or does not select a control route personally, an appropriate control route is selected according to processing content. Thus, it is possible to improve convenience of the control system 1.

In the terminal apparatus 50 according to the first embodiment, the route selecting unit 512 selects a control route according to whether communication is established between the terminal apparatus 50 and the control apparatus 30. Therefore, it is possible to appropriately select a control route according to whether the terminal apparatus 50 is present indoors or outdoors.

In the terminal apparatus 50 according to the first embodiment, the route selecting unit 512 selects a control route according to the number of electrical appliances controlled by the input received by the input receiving unit 511. Therefore, it is possible to cause the control apparatus 30 to execute control, for example, when a plurality of electrical appliances are controlled in association with one another and directly execute control when one electrical appliance is independently controlled. Therefore, it is possible to select a more efficient control route according to content of processing.

In the terminal apparatus 50 according to the first embodiment, the route selecting unit 512 selects a control route according to control execution time designated by the input received by the input receiving unit 511. Therefore, when control execution time is later, it is possible to select a control route in which a history can be surely left even if it takes time. When the control execution time is coming soon, it is possible to select a control route by placing more importance on a quick response than the leaving of a history. Therefore, it is possible to adjust control speed by appropriately responding to needs of the user.

The terminal apparatus 50 according to the first embodiment further includes the display unit 540 configured to display an interface for receiving an input for controlling at least one electrical appliance. The interface is displayed in common irrespective of which of the control routes the route selecting unit 512 selects. Therefore, the user can realize control at processing speed corresponding to processing content without being aware of switching of the control routes. Thus, it is possible to improve the convenience of the control system 1.

### Modifications

In the first embodiment, the user is not aware of the control route, and the terminal apparatus 50 selects an appropriate control route and executes processing. However, the present invention is not limited to this. The terminal apparatus 50 may be configured such that the user can also designate, on the display unit 540, a control route in which processing is executed. For example, when the user specifies an electrical appliance that the user desires to control and inputs desired control content looking at the display unit 540 of the terminal apparatus 50, the user also designates a control route. In Act 401 shown in FIG. 4, the input receiving unit 511 skips the processing by the route selecting unit 512 and transmits information concerning the control route designated by the user to the signal transmitting unit 513. The signal transmitting unit 513 transmits a control signal via the control route designated by the user and control is executed. With such a configuration, the user can consciously select a control route in which processing speed desired by the user can be realized and cause the control system 1 to execute processing. Therefore, it is possible to improve the convenience for the user.

A control route may be selected on the basis of standards other than the standards explained in the first embodiment. For example, the route selecting unit may be configured to detect a failure or an operation stop of the server and the control apparatus and select a control route not passing through the server and the control apparatus in which the failure or the operation stop is detected. With such a configuration, even when a deficiency occurs in a part of the control system 1, it is possible to continue the control processing without making the user feel inconvenience.

It is possible to set a selection standard for a control route taking security into account. For example, the terminal apparatus 50 can be set in advance to prohibit execution of control via the first control route when the user stays indoors. Alternatively, the terminal apparatus 50 can be set in advance to enable only control via the second and third control routes when the entrance of the house is locked. The terminal apparatus 50 may be configured such that the user can arbitrarily set such a selection standard for a control route.

A computer program for realizing the processing explained in the first embodiment may be prepared as an application that can be distributed via a network. In this case, the user can use the control system 1 by downloading the application to a terminal apparatus of the user. With such a configuration, even if a dedicated terminal apparatus is not prepared, it is possible to easily use the control system 1. Therefore, it is possible to contribute to the convenience of the control system 1.

When a plurality of the terminal apparatuses 50 are present, if the control by the first control route and the control by the second control route or the third control route are simultaneously performed, the control by the second control route or the third control route may be preferentially performed. That is, since the control by the second control route or the third control route is indoor operation, by preferentially performing such indoor operation, the intension of the user is more reflected compared with remote operation. Further, since the user can determine the operation after checking a state of an electrical appliance, a system with high safety is built. Further, the terminal apparatus 50 may be configured such that an electrical appliance to be controlled can determine by which of the first control route, the second control route, and the third control route the electrical appliance is controlled. The control by the second control route and the third control route may be preferentially performed compared with the control by the first control route.

As explained above, the terminal apparatus and the control system according to the embodiment can select an optimum control route among the plurality of control routes and execute control processing for an electrical appliance.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A terminal apparatus (50) comprising:
an input receiving unit (511) configured to receive an input for controlling at least one electrical appliance among a plurality of electrical appliances (40A, 40B, 40C);
a route selecting unit (512) configured to select one control route among a first control route for controlling the electrical appliance via a server (10) and a control apparatus (30) connected to each other via a network (20), a second control route for controlling the electrical appliance via the control apparatus (30) that controls the plurality of electrical appliances (40A, 40B, 40C), and a third control route for directly controlling the electrical appliance (40A, 40B, 40C); and
a signal transmitting unit (513) configured to transmit, through the control route selected by the route selecting unit (512), a control signal for causing the control apparatus (30) to execute control corresponding to the input received by the input receiving unit (511).

2. The terminal apparatus (50) according to claim 1, further comprising:
a result receiving unit (514) configured to receive an execution result of the control corresponding to the control signal transmitted by the signal transmitting unit (513); and
a storing unit (520) configured to store the execution result received by the result receiving unit (514).

3. The terminal apparatus (50) according to claim 2, wherein the execution result stored in the storing unit (520) is transmitted to the server (10) at every predetermined time or every time a predetermined event occurs.

4. The terminal apparatus (50) according to any one of claims 1 to 3, wherein the route selecting unit (512) selects one control route among the first, second, and third control routes according to a standard set in advance.

5. The terminal apparatus (50) according to any one of claims 1 to 4, wherein the route selecting unit (512) selects a control route according to whether communication is established between the terminal apparatus (50) and the control apparatus (30).

6. The terminal apparatus (50) according to any one of claims 1 to 5, wherein the route selecting unit (512) selects a control route according to a number of electrical appliances controlled by the input received by the input receiving unit (511).

7. The terminal apparatus (50) according to any one of claims 1 to 6, wherein the route selecting unit (512) selects a control route according to control execution time designated by the input received by the input receiving unit (511).

8. The terminal apparatus (50) according to any one of claims 1 to 7, wherein the route selecting unit (512) detects a failure or an operation stop of the server (10) and the control apparatus (30) and selects a control route not passing through the server (10) and the control apparatus (30) in which the failure or the operation stop is detected.

9. The terminal apparatus (50) according to any one of claims 1 to 8, further comprising a display unit (540) configured to display an interface for receiving an input for controlling at least one electrical appliance (40A, 40B, 40C), wherein
the interface is displayed in common irrespective of which of the control routes the route selecting unit (512) selects.

10. A control system (1) comprising:
a plurality of electrical appliances (40A, 40B, 40C);
a control apparatus (30) configured to control the plurality of electrical appliances (40A, 40B, 40C);
a server (10) connected to the control apparatus (30);
and
the terminal apparatus (50) according to any one of claims 1 to 9.
